# FASCICULE DE BREVET EUROPEEN

(11) **EP 1 548 412 B1**
(45) Date de publication et mention de la délivrance du brevet: **15.11.2006**
(21) Numéro de dépôt: 04300841.6
(22) Date de dépôt: 02.12.2004
(51) Int. Cl.: G01D 11/30

(54) **Dispositif de protection d'une sonde solidaire d'une paroi externe d'un avion.**
Vorrichtung zum Schutz einer Sonde in der Aussenwand eines Flugzeugs
Device for the protection of a probe in the external hull of an airplane

(30) Priorité: 19.12.2003 FR 0351148
(43) Date de publication de la demande: 29.06.2005
(73) Titulaire: AIRBUS France, 31060 Toulouse Cedex 03 (FR)
(72) Inventeur: D'Ouince, Arnaud, 31300, TOULOUSE (FR); Brivet, Valérie, 31490 Leguevin (FR)
(74) Mandataire: Camus, Olivier Jean-Claude

(56) Documents cités:
- WO-A-00/04336
- DE-A- 2 802 570
- US-A- 2 532 316
- US-A- 3 080 817
- US-A- 5 312 152
- US-A- 5 938 147
- US-B1- 6 612 521

## Description

L'invention a pour objet un dispositif de protection d'une pièce solidaire d'une paroi. Plus précisément l'invention a pour objet un dispositif de protection d'une sonde fixée sur une paroi externe d'un avion. Le dispositif de protection permet d'isoler la sonde de phénomènes extérieurs. L'invention concerne plus particulièrement des moyens de fixation amovibles du dispositif de protection de ladite sonde sur la paroi de l'avion.

Un but de l'invention est de fournir un dispositif de protection permettant d'isoler temporairement et de manière efficace une sonde des éléments extérieurs. Un autre but de l'invention est de permettre un retrait automatique du dispositif de protection à un stade précoce de démarrage de l'avion.

Les avions sont munis de nombreuses sondes disposées sur leur paroi externe. Les sondes peuvent ainsi être au contact d'éléments extérieurs devant être pris en compte lors d'un décollage des avions. Par exemple, ces sondes sont des sondes anémométriques, c'est à dire permettant de mesurer une vitesse de l'air et des turbulences extérieures. Notamment, on connaît comme sondes anémométriques des tubes Pitot, qui sont des appareils de mesure de la vitesse de l'avion par rapport à l'air. Les tubes Pitot prennent en compte une vitesse propre de l'avion, combinée à une vitesse du vent. Il existe également des sondes thermométriques d'ambiance, permettant de mesurer une température extérieure à l'avion, des sondes manométriques permettant de mesurer une pression de l'air, et des sondes clinométriques permettant de mesurer un angle d'incidence ou de dérapage de l'avion. Toutes ces sondes doivent être en contact avec l'air pour fonctionner. Cependant, lorsque l'avion est au sol, ces sondes doivent être protégées de certains événements extérieurs. En effet, la pluie, la neige, le sable, la poussière , les insectes etc peuvent endommager les sondes.

Il est donc connu de recouvrir chaque sonde d'une protection lorsque l'avion est au sol pour au moins quelques heures. La protection recouvre au moins partiellement la sonde, afin de l'isoler de la pluie, du vent etc, lorsque l'avion est au sol. Les protections utilisées actuellement sont disposées et retirées manuellement.

Avant le démarrage de l'avion, la protection doit impérativement être retirée. En effet, la plus part des sondes disposées sur la paroi extérieure de l'avion permettent de mesurer des paramètres extérieurs devant nécessairement être pris en compte pour permettre le décollage de l'avion. Si les protections ne sont pas retirées, les sondes ne peuvent pas être en contact des éléments extérieurs, et ne peuvent donc pas mesurer ces paramètres. Le décollage est alors généralement impossible ou dangereux car les informations fournies par les sondes sont alors erronées.

Par ailleurs, de nombreuses protections sont en plastique. Lors du démarrage d'un moteur de l'avion, le réchauffage des sondes se met en route. La température des sondes peut alors s'élever au-dessus de 200°C. Si les protections n'ont pas été retirées, elles risquent de fondre sur les sondes, endommageant celles-ci de manière irrévocable.

Actuellement, le retrait des protections se faisant manuellement, il est possible que certaines protections soient oubliées sur la paroi de l'avion, entraînant les dommages cités plus haut.

Dans l'invention on cherche à résoudre les problèmes énoncés ci-dessus en proposant un système de retrait automatique des protections en cas d'oubli.

Les protections selon l'invention peuvent être fixées et retirées de manière mécanique et manuelle de la paroi de l'avion portant les sondes à protéger. Cependant, si une protection est oubliée sur la paroi de l'avion alors que ledit avion doit décoller, la protection est retirée automatiquement à un stade précoce du démarrage de l'avion. Par stade précoce, on entend démarrage du premier moteur ou démarrage de l'alimentation électrique du réchauffage de la sonde.

Pour cela, les protections selon l'invention sont chacune munies d'un ou plusieurs moyens de fixation amovibles sensibles à une température dans un environnement de la sonde. C'est à dire que lorsque la température de la paroi de l'avion autour de la sonde et/ou de la sonde elle même augmente, les protections qui ont par exemple été oubliées sur la paroi de l'avion se désolidarisent automatiquement de ladite paroi.

Selon un premier mode de réalisation de l'invention, on peut prévoir que les protections se désolidarisent automatiquement de la paroi lorsque la température de la paroi et autour des sondes dépasse une température seuil. La température seuil est préférentiellement supérieure à 60°C, afin d'éviter une désolidarisation inopinée des protections lorsque l'avion est stationné dans un lieu où la température au sol avoisine les 60°C. De même, la température seuil est préférentiellement inférieure à une température à laquelle un matériau constituant la protection commence à fondre.

La température autour de la sonde augmente lorsque la sonde est alimentée en courant électrique. Généralement, la sonde est alimentée en courant électrique dès qu'un moteur de l'avion est démarré. Aussi, en faisant dépendre le retrait automatique des protections d'une élévation de la température environnante des sondes qu'elles protègent, on s'assure du retrait de toutes les protections à un stade précoce de la mise en route de l'avion. Ainsi, aucune protection oubliée ne risque de fondre sur une sonde.

Par exemple, les moyens de fixation sont des ventouses se fixant sur la paroi de l'avion par vide partiel. Les ventouses se décollent automatiquement de la paroi externe de l'avion dès que la température environnante de la sonde, et donc de la paroi portant la sonde, augmente. En effet, le vide partiel créé à l'endroit des ventouses tend à disparaître lorsque la paroi et les ventouses sont soumises à une élévation de la température. Cependant, une telle solution peut ne pas toujours donner entière satisfaction. En effet, selon les ventouses utilisées et lorsque l'avion est au sol pour une durée supérieure à 12 heures, les risques de décollement incongrus des ventouses peuvent augmenter.

Dans un autre exemple de réalisation de l'invention, il est possible d'utiliser des moyens de fixation dont des matériaux constituants sont des matériaux à mémoire de forme. Les matériaux à mémoire de forme sont des alliages pouvant être déformés de manière mécanique à froid. Ces matériaux retrouvent leur aspect de départ lorsqu'ils sont soumis à une température supérieure à leur température de déformation. Cette modification de la forme est due à une modification de la structure cristalline de l'alliage.

Ainsi, on peut par exemple prévoir de réaliser les moyens de fixation des protections dans un alliage nickel titane. Lors de la mise en place de la protection autour de la sonde, on déforme mécaniquement son ou ses moyens de fixation, afin par exemple de leur donner une forme en clip. Il est alors possible d'introduire une partie traversante des moyens de fixation dans des trous ménagés sur la paroi de l'avion. Les moyens de fixation se clippent dans les trous de la paroi de l'avion. Les clips, ou parties de maintien des moyens de fixation, permettent de maintenir la protection sur la paroi. Lorsqu'on souhaite faire démarrer l'avion, il est possible de déclipper préalablement et manuellement les protections. Par exemple, on peut exercer un effort de traction sur la protection.

Cependant, si une protection d'une sonde est oubliée sur la paroi de l'avion, ladite protection se déclippe automatiquement lorsque la température environnante de la sonde augmente et dépasse la température de déformation du matériau. En effet, les moyens de fixation, déformés mécaniquement de manière à former un clip, retrouvent leur forme initiale lorsque la température dépasse la température de déformation.

La température de déformation dépend des constituants de l'alliage utilisés pour fabriquer les moyens de fixation. Par exemple, il est possible d'ajouter dans un alliage titane nickel un autre composant tel que du fer, du chrome, du manganèse ou de l'aluminium. On diminue ainsi la température de déformation du matériau à mémoire de forme. C'est à dire qu'on diminue la température seuil à laquelle la protection se désolidarise automatiquement de la paroi de l'avion. Inversement, on peut ajouter à l'alliage nickel titane de l'or ou du palladium afin d'augmenter la température de déformation dudit alliage. Cette dernière solution est notamment intéressante lorsque les avions sont stationnés dans des lieux où une température au sol est élevée. En effet, on évite ainsi que les protections se désolidarisent de la paroi alors qu'aucun décollage de l'avion n'est prévu. Dans un autre exemple, on peut utiliser comme matériau à mémoire de forme un alliage cuivreux, dont un coût est inférieur au coût de l'alliage nickel titane.

La forme initiale des moyens de fixation, c'est à dire avant déformation mécanique, est telle qu'elle ne permet pas un maintien de la protection sur la paroi de l'avion. Par exemple, les moyens de fixation ont initialement une forme cylindrique. Un diamètre du cylindre est inférieur à un diamètre des trous ménagés sur la paroi de l'avion et dans lesquels ils sont introduits. Ainsi, les moyens de fixation ne sont plus maintenus dans les trous de la paroi lorsqu'ils retrouvent leur forme initiale cylindrique. La protection peut alors tomber au sol du fait de la gravité, et/ou des vibrations de l'avion.

Dans un autre mode de réalisation, il est possible de faire dépendre directement le maintien de la protection sur la paroi de l'avion d'une mise en route d'au moins un moteur de l'avion ou de la sonde. C'est à dire que l'on associe une désolidarisation automatique de la protection à une alimentation en courant électrique d'un moteur ou de la sonde. L'alimentation en courant électrique est par ailleurs responsable de l'augmentation de la température dans l'environnement de la sonde.

Par exemple, il est possible de réaliser les moyens de fixation dans un matériau magnétostrictif. Les matériaux magnétostrictifs ont la propriété de se déformer sous l'action d'un champ magnétique. Généralement les matériaux magnétostrictifs sont des composés de synthèse ou des céramiques. Après une introduction des moyens de fixation dans les trous de la paroi, on peut déformer mécaniquement lesdits moyens de fixation de manière à ce qu'ils soient maintenus dans les orifices de la paroi de l'avion. Lorsque les moyens de fixation, déformés, sont soumis à un champs magnétique, ils tendent à retrouver leur forme initiale.

Dans un exemple de réalisation particulier de l'invention, on peut faire dépendre la création du champ magnétique d'un électroaimant monté en dérivation sur un circuit électrique alimentant la sonde elle-même. Ainsi, dès la sonde est alimentée, le courant électrique modifie des propriétés magnétiques de l'électroaimant, créant ainsi un champ magnétique.

Le champ magnétique permet la déformation du matériau magnétostrictif formant les moyens de fixation. Les moyens de fixation reprennent alors leur forme initiale. Ladite forme initiale, c'est à dire avant déformation mécanique, est telle que les moyens de fixation ne sont plus maintenus dans les trous de la paroi. La protection peut alors tomber au sol, du fait de la gravité et/ou des vibration de l'avion.

Dans un autre exemple de réalisation de l'invention, les moyens de fixation sont chacun formés d'une partie traversante, apte à traverser la paroi, et d'une partie de maintien, indépendante de la partie traversante. Lors d'un montage de la protection, on introduit la partie traversante dans un trou de la paroi. On maintient ensuite la partie traversante en position grâce à une partie de maintien. Par exemple, chaque partie traversante est munie à l'endroit d'une extrémité destinée à traverser la paroi de l'avion, d'un logement apte à recevoir une partie de maintien. La partie de maintien est introduite dans le logement, et maintien ladite partie traversante dans le trou. Par exemple, la partie de maintien, une fois disposée dans le logement, peut s'étendre perpendiculairement à la partie traversante. La partie de maintien vient alors au contact d'une face interne de la paroi de l'avion, et empêche la partie traversante de coulisser dans le trou.

Il est possible de retirer manuellement la protection en exerçant un effort de traction sur ladite protection. Par exemple, le logement ménagé sur la partie traversante a une forme triangulaire. C'est à dire qu'un volume interne du logement est plus important à l'endroit d'une extrémité basse dudit logement qu'à l'endroit d'une extrémité haute. La partie de maintien a par exemple une forme cylindrique. La forme cylindrique peut être contenue dans le volume de l'extrémité basse du logement, mais pas dans le volume de l'extrémité haute du logement. En tirant sur la protection, on modifie une position de la partie de maintien dans le logement, depuis l'extrémité basse vers l'extrémité haute. La partie de maintien n'étant plus disposée dans le logement, la partie traversante n'est plus maintenue dans le trou. La protection est ainsi désolidarisée de la paroi.

La partie de maintien peut être sensible à un champ magnétique généré par un électroaimant. L'électroaimant est par exemple monté en dérivation sur un circuit de courant électrique principal alimentant un moteur ou la sonde. Ainsi, comme précédemment, lorsque le moteur ou la sonde est allumé, l'électroaimant émet un champ magnétique. La partie de maintien peut alors être attirée hors du logement ménagé sur la partie traversante. La partie traversante n'est plus maintenue dans le logement, et la protection peut tomber au sol.

La protection est par exemple constituée par un tube cylindrique circulaire. D'une manière générale, la protection est constituée d'un corps creux dont un volume interne est suffisant pour contenir au moins partiellement la sonde à protéger. Une face supérieure du tube cylindrique circulaire, en contact avec la paroi de l'avion, est munie d'au moins un moyen de fixation amovible. Il est possible de prévoir plusieurs moyens de fixations de l'invention. Par exemple, la protection comporte deux, trois ou quatre moyens de fixation disposés régulièrement sur un pourtour de la face supérieure du corps du dispositif. Il est possible de réaliser une protection munie de plusieurs moyens de fixation amovibles de l'invention différents. Par exemple, un premier moyen de fixation est en matériau magnétostrictif, tandis qu'un second est en matériau à mémoire de forme. Un troisième moyen de fixation peut lui être muni d'une partie de maintien sensible à un champ magnétique et maintenant une partie traversante dans un trou de la paroi.

Afin d'éviter une casse de la protection lorsqu'elle tombe au sol, il est possible de réaliser la protection dans un matériau résistant aux chocs, tel que du plastique. Par ailleurs, lorsque les moyens de fixation comportent au moins une partie destinée à traverser la paroi de l'avion, il est possible de réaliser les moyens de fixation en métal. On diminue ainsi les risques d'usure de ces moyens de fixation.

L'invention a donc pour objet un dispositif de protection d'une sonde solidaire d'une paroi externe d'un avion, le dispositif étant apte à recouvrir au moins partiellement ladite sonde et étant muni d'au moins un moyen amovible de fixation à la paroi, caractérisé en ce que le moyen amovible de fixation est sensible à une modification d'une température dans un environnement de la sonde.

La sonde protégée par une telle protection est par exemple une sonde anémométrique, une sonde clinométrique, une sonde thermométrique ou une sonde manométrique.

Dans un exemple de réalisation particulier de l'invention le moyen amovible de fixation comporte
- au moins un élément traversant, l'élément traversant étant solidaire par une extrémité basse d'un corps du dispositif, une extrémité haute de l'élément traversant étant apte à être logée dans un orifice ménagé dans la paroi,
- au moins un élément de maintien pouvant maintenir dans l'orifice l'extrémité haute de l'élément traversant.

Selon des exemples de réalisation de l'invention différents, l'élément traversant et l'élément de maintien peuvent former une seule et même pièce, ou être indépendants l'un de l'autre.

Dans un exemple particulier de réalisation du dispositif de l'invention, l'élément traversant est une broche, et l'élément de maintien est une goupille, la goupille étant apte à être logée dans un logement ménagé à l'endroit d'une extrémité haute de la broche, au moins la goupille étant sensible à un champs magnétique généré par un électroaimant lors d'un réchauffage de la sonde.

Il est alors possible de prévoir une polarisation, ou position de la goupille telle que la goupille est attirée hors du logement lorsque l'électroaimant génère un champs magnétique. Dans le même temps, il est possible de prévoir une polarisation de la broche telle que la broche est repoussée hors de l'orifice de la paroi lorsque l'électroaimant génère un champs magnétique. Une telle polarisation de la broche permet une projection du dispositif de protection loin de la paroi de l'avion. Ainsi, même lorsque les vibrations de l'avion sont insuffisantes, ou le poids du dispositif de protection trop faible, le dispositif de protection lorsqu'il est désolidarisé de la paroi, tombe au sol.

Dans tous les cas, il est possible de prévoir que le dispositif de protection puisse être monté et démonté manuellement, ou plus généralement mécaniquement, sur la paroi. La sensibilité du ou des moyens de fixation à la chaleur permet alors de parer à tout oublis d'un ou plusieurs dispositifs de protection sur la paroi.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un nez d'un avion à l'endroit d'une sonde externe et d'un dispositif de protection pouvant être de l'invention ;
- Figure 2 : une représentation générale d'un moyen de protection pouvant être de l'invention ;
- Figure 3 : une représentation schématique d'un dispositif de protection selon un exemple particulier de réalisation de l'invention ;
- Figures 4A et 4B : une représentation schématique d'un dispositif de protection selon un exemple de réalisation de l'invention, à l'endroit des moyens de fixation.

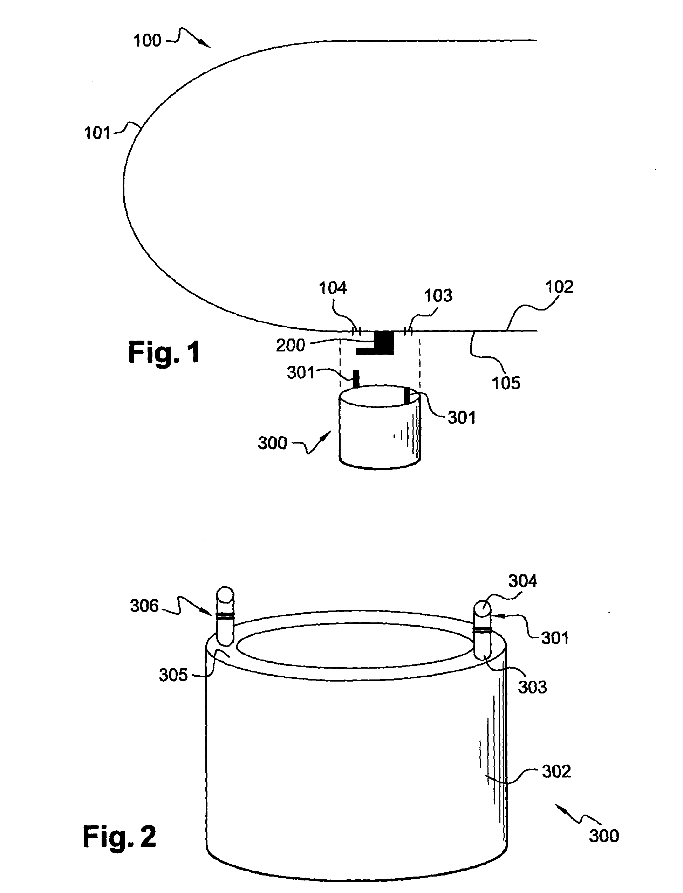

Sur la figure 1 est représentée schématiquement une tête 101 d'un avion 100. Une paroi 102 de l'avion 100 porte sur une face externe 105 une sonde 200. Par face externe, on entend face située à l'extérieur de l'avion 100. La paroi 102 de l'avion 100 est munie de deux orifices 103 et 104, encadrant la sonde 200. Les orifices 103 et 104 sont aptes à recevoir des moyens de fixation 301 d'un dispositif de protection 300 de la sonde 200.

Sur la figure 2 on peut voir une représentation plus détaillée du dispositif de protection 300. Le dispositif de protection 300 comporte un corps 302. Le corps 302 est ici de forme circulaire cylindrique creux fermé à une extrémité. La sonde 200 peut être logée dans le cylindre 302. Le dispositif de protection 300 comporte deux moyens de fixations 306. Les moyens de fixation 306 sont disposés de par et d'autre du corps 302. Chaque moyen de fixation 306 comporte un élément traversant 301. Une extrémité basse 303 de l'élément traversant 301 est solidaire d'une paroi 305 du corps 302 venant en contact avec la face externe 105 de la paroi 102. Une extrémité haute 304 de l'élément traversant 301 est apte à être logée dans l'orifice 103 ou 104 de la paroi 102. L'élément traversant 301 peut être maintenu dans l'orifice 103 ou 104 par un élément de maintien (non représenté sur la figure 2) du moyen de fixation 306.

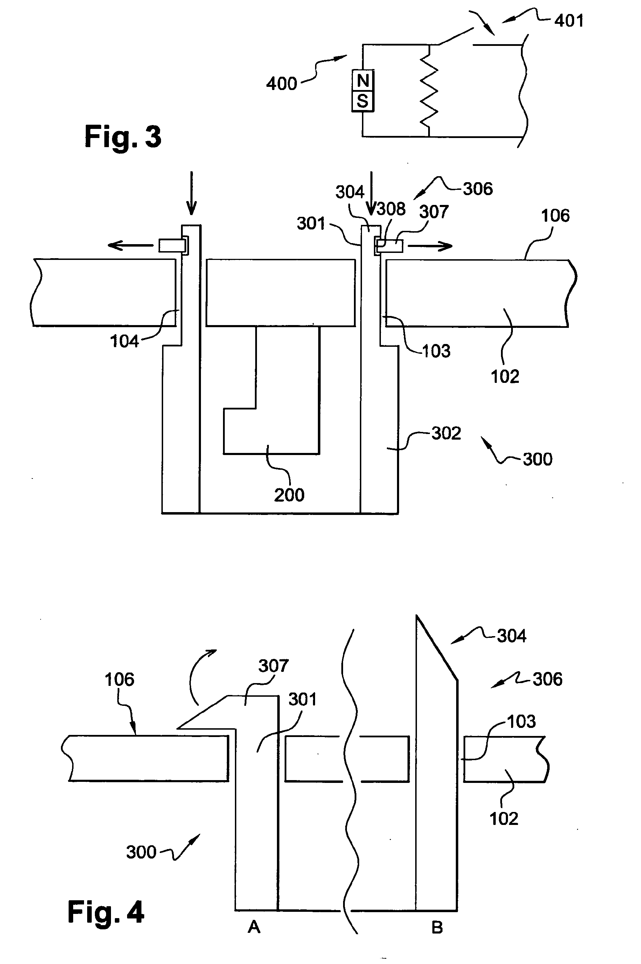

Sur la figure 3, on peut voir un exemple particulier de réalisation des moyens de fixation 306 selon l'invention. La sonde 200 est protégée des éléments extérieurs par le corps 302 du dispositif de protection 300. Par exemple, la sonde 200 est une sonde anémométrique. Le dispositif de protection 300 est maintenu sur la paroi 102 de l'avion 100, autour de la sonde 200, par les moyens de fixation 306 amovibles. Les moyens de fixation 306 sont formés d'un élément traversant 301 et d'un élément de maintien 307. L'élément de maintien 307 est une goupille. L'élément traversant 301 est une broche.

Lorsqu'on souhaite protéger la sonde 200 de l'extérieur, on introduit les éléments traversant 301 du dispositif 300 dans les orifices 103 et 104 ménagés sur la paroi 102 de l'avion 100. On dispose ensuite, par exemple manuellement, chaque goupille 307 dans un logement 308 ménagé sur l'extrémité haute 304 de chaque élément traversant 301. Le logement 308 est par exemple une encoche 308 dans laquelle la goupille 307 peut être au moins partiellement insérée. La goupille 307 a une longueur suffisante pour venir en butée contre une face interne 106 de la paroi 102. Par face interne 106 de la paroi 102, on entend face 106 située dans l'avion 100. Ainsi, lorsque la goupille 307 est dans l'encoche 308, la broche 301 ne peut pas sortir de l'orifice 103 ou 104.

La goupille 307 est réalisée dans un matériau pouvant être sensible à un champ magnétique généré par un électroaimant 400 lors d'un réchauffement de la sonde 200. Une position de la goupille 307 est telle que la goupille est attirée hors de l'encoche 308 lorsque l'électroaimant 400 génère un champ magnétique.

Dans un exemple particulier de réalisation de l'invention, on peut prévoir de réaliser l'élément traversant 301 dans un matériau également polarisable. Dans ce cas, on peut réaliser l'élément traversant 301 de manière à ce qu'une position de l'élément traversant 301 permette de repousser l'élément traversant 301 loin de l'électroaimant 400. Ainsi, l'élément traversant 301 est éjecté hors des orifices 103 et 104. C'est à dire que le dispositif de protection 300 est projeté vers le sol.

L'électroaimant 400 est par exemple monté en dérivation sur un circuit principal 401 alimentant la sonde 200 Lorsque la sonde 200. est allumée, le courant passe dans le circuit alimentant la sonde, ainsi que dans le circuit de l'électroaimant 400. L'électroaimant 400 génère alors un champ magnétique. Inversement, lorsque la sonde est coupée, c'est à dire lorsque l'avion est au sol pour un temps long, le circuit électrique est ouvert. L'électroaimant ne génère alors aucun champ magnétique.

Sur la figure 4 est représenté un autre exemple de réalisation des moyens de fixation 306 de l'invention. Dans cet exemple de réalisation, chaque moyen de fixation 306 est formé dans un matériau à mémoire de forme. L'élément traversant 301 et l'élément de maintien 307 sont en une seule pièce. Le moyen de fixation 306 a une forme générale initiale cylindrique (figure 4B). On introduit la tige cylindrique 306 dans l'orifice 103 ou 104 de la paroi 102 de l'avion 100, afin de protéger la sonde 200 (non représentée) de l'extérieur. On déforme ensuite l'extrémité haute 304 de l'élément traversant 301, afin d'imposer au moyen de fixation 306 une forme adéquate pour être maintenue sur la face interne 106. Cette déformation mécanique est par exemple réalisée manuellement ou par un outil adéquat. Ainsi, comme cela est représenté sur la figure 4A, l'extrémité haute 304 de l'élément traversant 301 forme, une fois déformée, l'élément de maintien 307. L'élément de maintien 307 s'étend sensiblement perpendiculaire à l'élément traversant 301, c'est à dire de manière à ce que l'élément de maintien 307 puisse reposer sur la face interne 106 de la paroi 102 de l'avion 100. Le dispositif 300 est alors maintenu sur la paroi 102 de l'avion 100.

Lorsqu'une température environnante de la sonde 200 augmente, et dépasse une température seuil de déformation de l'alliage formant l'élément de fixation 306, le moyen de fixation 306 reprend sa forme initiale, représentée à la figure 4B. Les moyens de fixation 306 ne sont alors plus maintenus dans les orifices 103 et 104. Le dispositif de protection 300 n'est alors plus maintenu sur la paroi 102. Le dispositif 300 tombe par exemple sur le sol, libérant un accès des éléments extérieurs à la sonde.

L'exemple représenté à la figure 4 peut également s'appliquer à un moyen de fixation 306 réalisé dans un matériau magnétostrictif. Dans ce cas, la déformation permettant au moyen de fixation 306 de se désolidariser de la paroi 102, est obtenue en soumettant le moyen de fixation 306 à un champ magnétique. Le champs magnétique peut notamment être généré par un électroaimant (non représenté) monté en dérivation sur un circuit électrique principal alimentant la sonde 200.

Avec le dispositif de protection 300 de l'invention, il est possible de disposer la protection 301 autour de la sonde 200 et de la retirer de manière manuelle. Cependant, en cas d'oubli d'au moins une protection 300 autour d'une sonde 200, ladite protection 300 oubliée se désolidarise automatiquement de la paroi 102 et tombe au sol. Cette désolidarisation automatique est liée, directement ou indirectement à l'augmentation de température à laquelle sont soumises la sonde 200 et la paroi 102 de l'avion 100 portant la sonde. Le démarrage d'un avion 100 étant toujours accompagné d'une augmentation de la température extérieure de la paroi 102, due à l'alimentation du réchauffage de la sonde, le dispositif de protection 300 de l'invention est dans tous les cas retiré d'une sonde 200 à un stade précoce du démarrage de l'avion 100.

Ainsi, en associant le retrait automatique des protections à l'élévation de la température, on élimine tout risque de préparation au décollage de l'avion alors qu'une protection entoure encore une sonde. On élimine donc tout risque d'endommagement, par exemple par fonte du dispositif sur la sonde. On élimine également tout risque de décollage de l'avion 100 avec la protection 300 qui empêcherait la sonde 200 de fonctionner correctement.

## Revendications

1. Dispositif (300) de protection d'une sonde (200) solidaire d'une paroi (102) externe (105) d'un avion (100), le dispositif étant apte à recouvrir au moins partiellement ladite sonde et étant muni d'au moins un moyen (306) de fixation à la paroi sensible à une modification d'une température dans un environnement de la sonde
**caractérisé en ce que** le moyen de fixation est amovible et comporte
- au moins un élément traversant (301), l'élément traversant étant solidaire par une extrémité basse (303) d'un corps (302) du dispositif, une extrémité haute (304) de l'élément traversant étant apte à être logée dans un orifice (103, 104) ménagé dans la paroi,
- au moins un élément de maintien (307) pouvant maintenir dans l'orifice l'extrémité haute de l'élément traversant.

2. Dispositif selon la revendication 1, **caractérisé en ce que** la sonde est une sonde anémométrique.

3. Dispositif selon la revendication 1, **caractérisé en ce que** la sonde est une sonde clinométrique.

4. Dispositif selon la revendication 1, **caractérisé en ce que** la sonde est une sonde thermométrique.

5. Dispositif selon la revendication 1, **caractérisé en ce que** la sonde est une sonde manométrique.

6. Dispositif selon l'une des revendications 1 à 5, **caractérisé en ce qu**'il est muni d'au moins deux moyens (306) amovibles de fixation disposés de part et d'autre du corps du dispositif.

7. Dispositif selon la revendication 6, **caractérisé en ce que** le corps du dispositif est en plastique, les éléments traversant et les éléments de maintien étant en métal.

8. Dispositif selon l'une des revendications 1 à 7, **caractérisé en ce que** l'élément traversant est une broche (301), et l'élément de maintien est une goupille (307), la goupille étant apte à être logée dans un logement (308) ménagé à l'endroit d'une extrémité haute (304) de la broche, au moins la position de la goupille étant sensible à un champs magnétique généré par un électroaimant (400) lors d'un réchauffage de la sonde.

9. Dispositif selon la revendication 8, **caractérisé en ce qu**'une position de la goupille est telle que la goupille est attirée hors du logement lorsque l'électroaimant génère un champs magnétique.

10. Dispositif selon la revendication 9, **caractérisé en ce qu'**une position de la broche est telle que la broche est repoussée hors de l'orifice de la paroi lorsque l'électroaimant génère un champs magnétique.

11. Dispositif selon l'une des revendications 1 à 10, **caractérisé en ce que** le moyen de fixation est en matériau magnétostrictif, une forme du moyen de fixation en l'absence de champs magnétique étant telle que le dispositif est solidaire de la paroi, une forme du moyen de fixation en présence d'un champs magnétique étant telle que le dispositif est désolidarisé de la paroi et
le champs magnétique étant généré par un circuit magnétique (400) dérivé d'un circuit électrique principal (401) chauffant l'environnement de la sonde.

12. Dispositif selon l'une des revendications 1 à 11, **caractérisé en ce que** le moyen de fixation est en matériau à mémoire de forme, une forme initiale du moyen de fixation étant telle que le dispositif est désolidarisé de la paroi, le moyen de fixation pouvant être déformé mécaniquement de manière à ce que le dispositif soit solidaire de la paroi.

## Claims

1. Device (300) for the protection of a probe (200) integral to an external (105) wall (102) of an aeroplane (100), whereby the device is suitable for at least partially covering said probe and whereby said device is fitted with at least one wall fixing means (306) sensitive to a change in temperature in the environment of the probe
**characterised in that** the fixing means is removable and includes
- at least one through-hole mount element (301), whereby the through-hole mount element is integral to the bottom end (303) of the body (302) of the device, and whereby the top end (304) of the through-hole mount element is suitable for being lodged in an orifice (103, 104) made in the wall,
- at least one maintaining element (307) that can hold in position in the orifice the top end of the through-hole mount element.

2. A device in accordance with claim 1, **characterised in that** the probe is an anemometric probe.

3. A device in accordance with claim 1, **characterised in that** the probe is a clinometric probe.

4. A device in accordance with claim 1, **characterised in that** the probe is a temperature probe.

5. A device in accordance with claim 1, **characterised in that** the probe is a pressure probe.

6. A device in accordance with one of claims 1 to 5, **characterised in that** it is fitted with at least two removable fixing means (306) positioned at either side of the body of the device.

7. A device in accordance with claim 6, **characterised in that** the body of the device is of plastic, and whereby the through-hole mount elements and the maintaining elements are made of metal.

8. A device in accordance with one of claims 1 to 7, **characterised in that** the through-hole mount element is a rod (301), and the maintaining element is a pin (307), whereby the pin is suitable for being lodged in a housing (308) made at the top end (304) of the rod, and whereby at least the position of the pin is sensitive to a magnetic field generated by an electromagnet (400) when the probe heats up.

9. A device in accordance with claim 8, **characterised in that** a position of the pin is such that the pin is attracted out of the housing when the electromagnet generates a magnetic field.

10. A device in accordance with claim 9, **characterised in that** a position of the rod is such that the rod is repelled out of the wall orifice when the electromagnet generates a magnetic field.

11. A device in accordance with one of claims 1 to 10, **characterised in that** the fixing means is made in a magnetostrictive material, and whereby the shape of the fixing means when no magnetic field is present is such that the device is integral to the wall, and whereby the shape of the fixing means when a magnetic field is present is such that the device breaks away from the wall, and whereby the magnetic field is generated by a magnetic circuit (400) installed in bypass to a main electrical circuit (401) heating the probe's environment.

12. A device in accordance with one of claims 1 to 11, **characterised in that** the fixing means is made in shape memory material, and whereby the initial shape of the fixing means is such that the device breaks away from the wall, and whereby the fixing means can be deformed mechanically so that the device is integral to the wall.

## Patentansprüche

1. Vorrichtung (300) für den Schutz einer an eine Außenwand (102) (105) eines Flugzeugs (100) angebauten Sonde (200), die die besagte Sonde zumindest teilweise abdecken kann und mit mindestens einem Befestigungselement (306) an der Wand befestigt ist, die auf eine Änderung einer Umgebungstemperatur der Sonde empfindlich reagiert,
**dadurch gekennzeichnet, dass** das Befestigungselement abnehmbar ist und
- mindestens ein durchgehendes Element (301) enthält, das an einem unteren Ende (303) eines Körpers (302) fest mit der Vorrichtung verbunden ist, wobei ein oberes Ende (304) des durchgehenden Elements in einer Öffnung (103, 104) in der Wand eingelassen werden kann,
- sowie mindestens ein Halteelement (307), das das obere Ende des durchgehenden Elements in der Öffnung festhält.

2. Vorrichtung nach Anspruch 1, **dadurch gekennzeichnet, dass** es sich bei der Sonde um eine anemometrische Sonde handelt.

3. Vorrichtung nach Anspruch 1, **dadurch gekennzeichnet, dass** es sich bei der Sonde um eine klinometrische Sonde handelt.

4. Vorrichtung nach Anspruch 1, **dadurch gekennzeichnet, dass** es sich bei der Sonde um einen Umgebungstemperaturfühler handelt.

5. Vorrichtung nach Anspruch 1, **dadurch gekennzeichnet, dass** es sich bei der Sonde um eine Drucksonde handelt.

6. Vorrichtung nach einem der vorherigen Ansprüche, **dadurch gekennzeichnet, dass** sie mit mindestens zwei abnehmbaren Befestigungselementen (306) ausgestattet ist, die an beiden Seiten des Körpers der Vorrichtung angebracht werden.

7. Vorrichtung nach Anspruch 6, **dadurch gekennzeichnet, dass** der Körper der Vorrichtung aus Kunststoff besteht und die durchgehenden Elemente und die Halteelemente aus Metall.

8. Vorrichtung nach einem der vorigen Ansprüche, **dadurch gekennzeichnet, dass** das durchgehende Element ein Dorn (301), und das Halteelement ein Bolzen (307), wobei Letzterer in einer Aufnahme (308) am oberen Ende (304) des Dorns angeordnet werden kann, wobei zumindest die Position des Bolzens auf ein von einem Elektromagneten (400) beim Erwärmen der Sonde erzeugtes Magnetfeld empfindlich reagiert.

9. Vorrichtung nach Anspruch 8, **dadurch gekennzeichnet, dass** der Bolzen so positioniert ist, dass er aus der Aufnahme gezogen wird, wenn der Elektromagnet ein Magnetfeld erzeugt.

10. Vorrichtung nach Anspruch 9, **dadurch gekennzeichnet, dass** der Dorn so positioniert ist, dass er aus der Öffnung der Wand gedrückt wird, wenn der Elektromagnet ein Magnetfeld erzeugt.

11. Vorrichtung nach einem der vorigen Ansprüche, **dadurch gekennzeichnet, dass** das Befestigungselement aus einem magnetostriktiven Werkstoff besteht, dass eine Form des Befestigungselements in Abwesenheit eines Magnetfelds so beschaffen ist, dass die Vorrichtung an der Wand befestigt ist, dass eine Form des Befestigungselements in Anwesenheit eines Magnetfelds so beschaffen ist, dass sich die Vorrichtung von der Wand löst, und dass das Magnetfeld durch einen Magnetkreis (400) erzeugt wird, der als Abzweigung in einem elektrischen Hauptstromkreis (401) montiert ist, der das Umfeld der Sonde aufwärmt.

12. Vorrichtung nach einem der vorigen Ansprüche, **dadurch gekennzeichnet, dass** das Befestigungselement aus einem Werkstoff mit Formgedächtnis besteht, dass eine ursprüngliche Form des Befestigungselements so beschaffen ist, dass sich die Vorrichtung von der Wand löst, dass das Befestigungselement mechanisch so verformt wird, dass die Vorrichtung fest mit der Wand verbunden bleibt.
